(19) Europäisches Patentamt
European Patent Office
Office européen des brevets

(11) **EP 3 605 813 A1**

(12) **EUROPÄISCHE PATENTANMELDUNG**

(43) Veröffentlichungstag:
**05.02.2020 Patentblatt 2020/06**

(51) Int Cl.:
*H02M 1/32* (2007.01)          *H02M 3/155* (2006.01)
*H02M 7/48* (2007.01)          *H02M 3/156* (2006.01)

(21) Anmeldenummer: **18186354.9**

(22) Anmeldetag: **30.07.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Fronius International GmbH
4643 Pettenbach (AT)**

(72) Erfinder:
• **Oberzaucher, Friedrich
4643 Pettenbach (AT)**

• **Wallisch, Gerhard
4643 Pettenbach (AT)**
• **Danmayr, Joachim
4643 Pettenbach (AT)**
• **Luger, Andreas
4643 Pettenbach (AT)**

(74) Vertreter: **Isarpatent
Patent- und Rechtsanwälte Behnisch Barth
Charles
Hassa Peckmann & Partner mbB
Friedrichstrasse 31
80801 München (DE)**

(54) **WECHSELRICHTER MIT ZWISCHENKREISSCHUTZ**

(57)     Wechselrichter (1) mit einem DC/DC-Wandler (4), der eine von einer Gleichspannungsquelle (3) erhaltene Gleichspannung in eine Zwischenkreisspannung eines Zwischenkreises (5) umwandelt, einem DC/AC-Wandler (6), der die Zwischenkreisspannung in eine Wechselspannung umwandelt, und mit einer Überwachungseinheit (8), welche Kondensatoren des Zwischenkreises (5) zum Schutz vor Überspannungen überwacht, wobei die Überwachungseinheit (8) bei Auftreten einer Überspannung an mindestens einem der Kondensatoren des Zwischenkreises (5) die Gleichspannungsquelle (3) von dem Zwischenkreis (5) durch Ansteuerung des DC/DC-Wandlers (4) entkoppelt.

FIG 1

**Beschreibung**

Die Erfindung betrifft ein Verfahren und eine Vorrichtung zum Schutz eines Wechselrichter-Zwischenkreises innerhalb eines Wechselrichters.

Wechselrichter dienen allgemein dazu eine vorliegende Gleichspannung in eine Wechselspannung umzuwandeln. Diese Wechselspannung kann beispielsweise in ein Stromversorgungsnetz eingespeist werden. Wechselrichter können für die Erzeugung von einphasigem Wechselstrom oder dreiphasigem Wechselstrom bzw. Drehstrom ausgelegt sein. Man unterscheidet ferner zwischen selbstgeführten Wechselrichtern, die auch als Inselwechselrichter bezeichnet werden und fremd- oder netzgeführten Wechselrichtern.

Ein Solarwechselrichter bildet einen Teil einer Solaranlage. Auf der Eingangsseite des Solarwechselrichters befinden sich üblicherweise ein oder mehrere Gleichstromsteller (DC/DC-Wandler), den ein Mikroprozessor gemäß der Funktion eines Maximum-Power-Point-Trackers steuert und/oder regelt und der den Zwischenkreis speist. Auf der Ausgangsseite des Solarwechselrichters befindet sich eine ein- bis dreiphasige AC-Stufe, die sich automatisch mit dem Stromversorgungsnetz synchronisieren kann. Der Zwischenkreis stellt eine elektrische Einrichtung dar, die als Energiespeicher verschiedene Umrichter (DC/DC-Wandler und DC/AC-Wandler) entkoppelt. Bei einem Gleichspannungszwischenkreis erfolgt die Entkopplung mittels Zwischenkreiskondensatoren bei konstanter Spannung und variablem Strom.

Dabei werden Kondensatoren in Reihe geschaltet, wenn die anzulegende Spannung größer ist als die zulässige Spannung eines einzelnen Kondensators. In Zwischenkreisen werden herkömmlicherweise Elektrolytkondensatoren verwendet. Diese Elektrolytkondensatoren sind üblicherweise mit einer Nennspannung von bis zu ca. 500 V erhältlich. Üblicherweise werden bei Schaltungsanordnungen, die eine Speicherung elektrischer Energie in Elektrolytkondensatoren mit Spannungen über 500 V vorsehen, zwei oder mehr Elektrolytkondensatoren in Reihe geschaltet. Da bei Solargeneratoren hohe Spannungen am Eingang des Wechselrichters auftreten können, werden an dem Zwischenkreis des Wechselrichters mehrere Kondensatoren zur eingangsseitigen Energiepufferung in Reihe verschaltet.

Die Reihenverschaltung mehrerer Kondensatoren hat jedoch den Nachteil, dass die gewünschte Spannungsbegrenzung für jeden einzelnen Kondensator des Zwischenkreises wegfällt, falls eine Störung auftritt, bei der einer der Kondensatoren des Zwischenkreises kurzgeschlossen wird. Ein derartiger Kurzschluss an einem Kondensator des Zwischenkreises führt dazu, dass die anliegende Eingangsspannung nunmehr auf die restlichen bisher nicht kurzgeschlossenen Kondensatoren aufgeteilt wird. Dies wiederum kann zur Überspannung und letztlich zu einem Defekt dieser Kondensatoren innerhalb des Zwischenkreises führen.

Es wird daher in der EP 2 145 368 B1 eine Schaltungsanordnung zur Überwachung der Spannungsaufteilung von in Serie geschalteten Kondensatoren eines Wechselrichter-Zwischenkreises vorgeschlagen. Dabei wird parallel zu den Kondensatoren des Zwischenkreises ein Spannungsteiler vorgesehen, der die Spannung zwischen den zwei Kondensatoren aufteilt, wobei parallel zu jedem Kondensator eine Schutzdiode in Reihe mit einem Serienwiderstand in der Weise angeordnet ist, dass die Schwellenspannung der Schutzdiode geringer als die zulässige Spannung des parallel zu der Schutzdiode angeordneten Kondensators ist, wobei parallel zu den Serienwiderständen eine Schutzschaltung angeordnet ist.

Es ist daher eine Aufgabe der vorliegenden Erfindung ein Verfahren und eine Vorrichtung zum Schutz eines Wechselrichter-Zwischenkreises zu schaffen, bei welcher der Zwischenkreis selbst schaltungstechnisch nicht verändert wird und der schaltungstechnische Aufwand zum Schutz des Zwischenkreises vor Überspannungen möglichst gering ist.

Diese Aufgabe wird erfindungsgemäß von einem Wechselrichter mit den in Patentanspruch 1 angegebenen Merkmalen gelöst.

Die Erfindung schafft demnach einen Wechselrichter mit einem DC/DC-Wandler, der eine von einer Gleichspannungsquelle erhaltene Gleichspannung in eine Zwischenkreisspannung eines Zwischenkreises umwandelt,

einem DC/AC-Wandler, der die Zwischenkreisspannung in eine Wechselspannung umwandelt, und mit

einer Überwachungseinheit, welche Kondensatoren des Zwischenkreises zum Schutz vor Überspannungen überwacht, wobei die Überwachungseinheit bei Auftreten einer Überspannung an mindestens einem der Kondensatoren des Zwischenkreises und/oder bei Auftreten einer unsymmetrischen Spannungsaufteilung der an den Kondensatoren des Zwischenkreises abfallenden Spannungen die von der Gleichspannungsquelle an den Zwischenkreis übertragene Energie durch Ansteuerung des DC/DC-Wandlers reduziert.

Durch den erfindungsgemäßen Wechselrichter erfolgt somit der Schutz des darin enthaltenen Zwischenkreises vor Überspannungen durch Ansteuerung des bereits innerhalb des Wechselrichters enthaltenen DC/DC-Wandlers. Eine schaltungstechnische Veränderung des innerhalb des Wechselrichters enthaltenen Zwischenkreises ist dabei nicht erforderlich.

In einer möglichen Ausführungsform des erfindungsgemäßen Wechselrichters steuert die Überwachungseinheit einen getakteten Schalter des DC/DC-Wandlers über eine Ansteuerlogik zum Schutz des Zwischenkreises vor Überspannungen an.

Bei einer möglichen Ausführungsform des erfindungsgemäßen Wechselrichters erfolgt die Ansteuerung des getakteten Schalters des DC/DC-Wandlers über die Ansteuerlogik durch die Überwachungseinheit, sobald an einem der Kondensatoren des Zwischenkreises eine Überspannung detektiert wird oder eine unsymmetrische Spannungsaufteilung der an den Kondensatoren des Zwischenkreises abfallenden Spannungen detektiert wird.

In einer möglichen Ausführungsform des erfindungsgemäßen Wechselrichters steuert die Überwachungseinheit den getakteten Schalter des DC/DC-Wandlers bei Auftreten einer Überspannung an einem der Kondensatoren des Zwischenkreises oder bei Auftreten einer unsymmetrischen Spannungsaufteilung der an den Kondensatoren des Zwischenkreises abfallenden Spannungen derart an, dass die von der Gleichspannungsquelle an den Zwischenkreis über den DC/DC-Wandler übertragene Energie reduziert wird.

In einer weiteren möglichen Ausführungsform des erfindungsgemäßen Wechselrichters weist der DC/DC-Wandler eine Hochsetzstellerschaltung auf, die eine von einer Gleichspannungsquelle generierte Gleichspannung auf eine vorgegebene Zwischenkreisspannung des Zwischenkreises anhebt.

In einer weiteren möglichen Ausführungsform des erfindungsgemäßen Wechselrichters weist die mit dem DC/DC-Wandler verbundene Gleichspannungsquelle mindestens ein Photovoltaikmodul auf.

In einer weiteren möglichen Ausführungsform des erfindungsgemäßen Wechselrichters steuert die Überwachungseinheit des Zwischenkreises einen getakteten Boostschalter der Hochsetzstellerschaltung über die Ansteuerlogik an, falls eine Überspannung an einem der Kondensatoren des Zwischenkreises und/oder eine unsymmetrische Spannungsaufteilung der an den Kondensatoren des Zwischenkreises abfallenden Spannungen durch die Überwachungseinheit des Wechselrichters detektiert wird.

In einer weiteren möglichen Ausführungsform des erfindungsgemäßen Wechselrichters ist der DC/AC-Wandler des Wechselrichters ausgangsseitig über mindestens eine Drosselspule und mindestens ein AC-Relais mit einem Spannungsversorgungsnetz verbunden.

In einer weiteren möglichen Ausführungsform des erfindungsgemäßen Wechselrichters speichert die Überwachungseinheit des Wechselrichters das Auftreten einer Überspannung an einem der Kondensatoren des Zwischenkreises und/oder das Auftreten einer unsymmetrischen Spannungsaufteilung der an den Kondensatoren des Zwischenkreises abfallenden Spannungen in einem Speicher der Überwachungseinheit und/oder aktiviert einen Schutzbetriebsmodus zum Schutz der Kondensatoren des Zwischenkreises vor Überspannungen.

In einer weiteren möglichen Ausführungsform des erfindungsgemäßen Wechselrichters gibt die Überwachungseinheit ein Fehlersignal über eine Schnittstelle aus, falls eine Überspannung an einem der Kondensatoren des Zwischenkreises und/oder eine unsymmetrische Spannungsaufteilung der an den Kondensatoren des Zwischenkreises abfallenden Spannungen durch die Überwachungseinheit des Wechselrichters detektiert wird.

In einer weiteren möglichen Ausführungsform des erfindungsgemäßen Wechselrichters werden Spannungsabfälle über jeden der innerhalb des Zwischenkreises seriell verschalteten Kondensatoren mittels Spannungssensoren der Überwachungseinheit sensorisch erfasst bzw. gemessen.

In einer weiteren möglichen Ausführungsform des erfindungsgemäßen Wechselrichters weist der Zwischenkreis mindestens zwei seriell verschaltete Elektrolytkondensatoren auf.

In einer weiteren möglichen Ausführungsform des erfindungsgemäßen Wechselrichters werden die Überwachungseinheit und die Ansteuerlogik von der Gleichspannungsquelle mit einer Versorgungsspannung versorgt.

In einer weiteren möglichen Ausführungsform des erfindungsgemäßen Wechselrichters verfügt die Überwachungseinheit über ein eigenes Netzteil, das an einem Spannungsversorgungsnetz angeschlossen ist.

Die Erfindung schafft gemäß einem weiteren Aspekt ein Verfahren zum Schutz eines Wechselrichter-Zwischenkreises mit den in Patentanspruch 12 angegebenen Merkmalen.

Die Erfindung schafft demnach ein Verfahren zum Schutz eines Wechselrichter-Zwischenkreises, der zur Pufferung einer von einem DC/DC-Wandler abgegebenen Spannung vorgesehen ist und mehrere Kondensatoren aufweist,

wobei das Verfahren die folgenden Schritte umfasst: Erfassen der über die Kondensatoren des Zwischenkreises jeweils abfallenden Spannungen,

Überwachen, ob eine Überspannung an einem der Kondensatoren des Zwischenkreises und/oder eine unsymmetrische Spannungsaufteilung der an den Kondensatoren des Zwischenkreises abfallenden Spannungen auftritt und

Reduzieren der an den Zwischenkreis übertragenen Energie durch Ansteuerung des DC/DC-Wandlers, sobald eine Überspannung und/oder eine unsymmetrische Spannungsaufteilung detektiert wird.

In einer möglichen Ausführungsform des erfindungsgemäßen Verfahrens wird, sobald eine Überspannung an einem der Kondensatoren des Zwischenkreises oder eine unsymmetrische Spannungsaufteilung der an den Kondensatoren des Zwischenkreises abfallenden Spannungen detektiert wird, ein getakteter Schalter des DC/DC-Wandlers derart angesteuert, dass eine von einer Gleichspannungsquelle über den DC/DC-Wandler an den Zwischenkreis übertragene Energie reduziert wird.

In einer möglichen Ausführungsform des erfindungsgemäßen Verfahrens wird eine Spannungsdifferenz zwischen den über die Kondensatoren des Zwischenkreises abfallenden Spannungen ermittelt.

In einer weiteren möglichen Ausführungsform des erfindungsgemäßen Verfahrens wird eine unsymmetrische Spannungsaufteilung detektiert, sobald die ermittelte Spannungsdifferenz zwischen den über die Kondensatoren des Zwischenkreises abfallenden Spannungen einen Schwellenwert überschreitet.

Im Weiteren werden mögliche Ausführungsform des erfindungsgemäßen Verfahrens sowie der erfindungsgemäßen Vorrichtung zum Schutz eines Wechselrichter-Zwischenkreises unter Bezugnahme auf die beigefügten Figuren näher erläutert.

Es zeigen:

Fig. 1     ein Blockschaltbild eines exemplarischen Ausführungsbeispiels des erfindungsgemäßen Wechselrichters;

Fig. 2     ein Schaltungsdiagramm zur Darstellung eines Ausführungsbeispiels eines erfindungsgemäßen Wechselrichters;

Fig. 3     ein Ablaufdiagramm zur Darstellung eines Ausführungsbeispiels eines erfindungsgemäßen Verfahrens zum Schutz eines Wechselrichter-Zwischenkreises; und

Fig. 4a, 4b     Schaltungsdiagramme zur Darstellung möglicher Anwendungsbeispiele eines erfindungsgemäßen Wechselrichters.

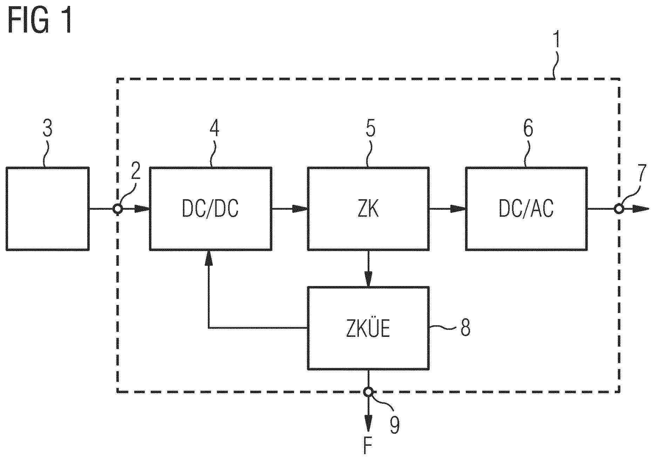

Fig. 1 zeigt ein Blockdiagramm zur Darstellung eines Ausführungsbeispiels eines erfindungsgemäßen Wechselrichters 1. Der Wechselrichter 1 besitzt einen Eingang 2, der mit einer Gleichspannungsquelle 3 verbunden sein kann. Diese Gleichspannungsquelle 3 weist bei einer möglichen Ausführungsform mindestens ein Photovoltaikmodul auf und liefert eine Gleichspannung an den Eingang 2 des Wechselrichters 1. Der Wechselrichter 1 enthält einen DC/DC-Wandler 4, welcher die von der Gleichspannungsquelle 3 erhaltene Gleichspannung in eine Zwischenkreisspannung für einen Zwischenkreis 5 des Wechselrichters 1 umwandelt. Der Wechselrichter 1 enthält ferner einen DC/AC-Wandler 6, der die Zwischenkreisspannung des Zwischenkreises 5 in eine Wechselspannung umwandelt, die an einem Ausgang 7 des Wechselrichters 1 ausgegeben wird. Der Wechselrichter 1 weist eine Überwachungseinheit 8 auf, die an den Zwischenkreis 5 angeschlossen ist. Die Überwachungseinheit 8 überwacht die Kondensatoren des Zwischenkreises 5 zum Schutz des Zwischenkreises 5 vor Überspannungen. Bei Auftreten einer Überspannung an mindestens einem der Kondensatoren C des Zwischenkreises 5 reduziert die Überwachungseinheit 8 die von der Gleichspannungsquelle 3 an den Zwischenkreis 5 übertragene Energie durch Ansteuerung des DC/DC-Wandlers 4, wie in Fig. 1 schematisch dargestellt.

Die Zwischenkreis-Überwachungseinheit 8 ist bei einer möglichen Ausführungsform in einem Prozessor integriert.

Sobald die Überwachungseinheit 8 eine Überspannung an einem der Kondensatoren C des Zwischenkreises 5 und/oder eine unsymmetrische Spannungsaufteilung der an den Kondensatoren C des Zwischenkreises 5 abfallenden Spannungen detektiert, kann die Überwachungseinheit 8 über eine Ansteuerlogik 10 einen getakteten Schalter innerhalb des DC/DC-Wandlers 4 derart ansteuern, dass die von der Gleichspannungsquelle 3 an den Zwischenkreis 5 übertragene Energie reduziert wird. In einer möglichen Ausführungsform kann die Überwachungseinheit 8 des Wechselrichters 1 das Auftreten einer Überspannung an einem der Kondensatoren C des Zwischenkreises 5 und/oder das Auftreten einer unsymmetrischen Spannungsaufteilung der an den Kondensatoren C des Zwischenkreises 5 abfallenden Spannungen in einem lokalen Speicher speichern und/oder einen Schutzbetriebsmodus zum Schutz der Kondensatoren C des Zwischenkreises 5 vor Überspannungen automatisch aktivieren. In dem Schutzbetriebsmodus wird vorzugsweise ein innerhalb des DC/DC-Wandlers 4 vorgesehener getakteter Schalter derart angesteuert, dass die von der Gleichspannungsquelle 3 an den Zwischenkreis 5 über den DC/DC-Wandler 4 übertragene elektrische Energie reduziert wird. Der Schalter wird dabei vorzugsweise periodisch getaktet, wobei die übertragene elektrische Energie reduziert wird, um den Zwischenkreis 5 von der Gleichspannungsquelle 3 zu entkoppeln bzw. innerhalb der Taktungsperiode länger zu trennen. In einer möglichen Ausführungsform generiert die Zwischenkreis-Überwachungseinheit 8 bei Auftreten einer Überspannung an einem der Kondensatoren C des Zwischenkreises 5 oder bei Auftreten einer unsymmetrischen Spannungsaufteilung der an den Kondensatoren C des Zwischenkreises 5 abfallenden Spannungen automatisch ein Fehlersignal F, das über eine Schnittstelle 9 des Wechselrichters 1 ausgegeben werden kann. Dieses Fehlersignal F kann weiteren Steuerungen innerhalb der Schaltungsanordnung anzeigen, dass der Wechselrichter 1 nunmehr in einem Schutzbetriebsmodus arbeitet. In einer möglichen Ausführungsform sind innerhalb des Zwischenkreises 5 mehrere Kondensatoren C seriell miteinander verschaltet. Dabei werden die Spannungsabfälle über jeden der innerhalb des Zwischenkreises 5 seriell verschalteten Kondensatoren C sensorisch erfasst und an die Zwischenkreis-Überwachungseinheit 8 des Wechselrichters 1 übermittelt. In einer möglichen Ausführungsform verfügt der Zwischenkreis 5 über mindestens zwei seriell verschaltete Elektrolytkondensatoren.

In einer möglichen Ausführungsform des erfindungsgemäßen Wechselrichters kann die Zwischenkreis-Überwachungseinheit 8 von der Eingangsseite her von der Gleichspannungsquelle 3 mit einer Versorgungsspannung versorgt werden. In einer alternativen Ausführungsform verfügt die Überwachungseinheit 8 bzw. der Wechselrichter 1 über ein eigenes Netzteil, das von einem Spannungsversorgungsnetz versorgt wird.

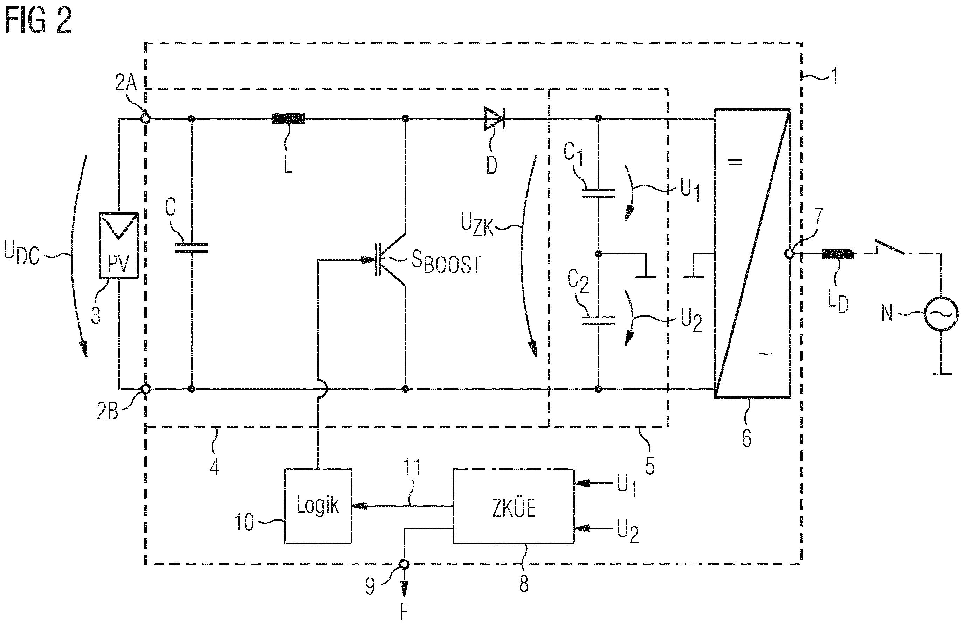

Fig. 2 zeigt ein Schaltungsdiagramm zur Erläuterung der Funktionsweise eines Ausführungsbeispiels des erfindungsgemäßen Wechselrichters 1.

Bei dem in Fig. 2 dargestellten Ausführungsbeispiel enthält der Zwischenkreis 5 zwei miteinander seriell verschaltete Kondensatoren C1, C2, wobei die über die beiden Kondensatoren C1, C2 jeweils abfallenden Spannungen U1, U2 durch die Zwischenkreis-Überwachungseinheit 8 des Wechselrichters 1 überwacht werden. Der Zwischenkreis 5 mit den beiden seriell verschalteten Kondensatoren C1, C2 ist zwischen einem DC/DC-Wandler 4 und einem DC/AC-Wandler 6 des Wechselrichters 1 verschaltet. Bei dem in Fig. 2 dargestellten Ausführungsbeispiel handelt es sich bei dem DC/DC-Wandler 4 um eine Hochsetzstellerschaltung. Diese Hochsetzstellerschaltung hebt die von der Gleichspannungsquelle 3 generierte Gleichspannung auf eine vorgegebene Zwischenkreisspannung des Zwischenkreises 5 an. Bei dem in Fig. 2 dargestellten Ausführungsbeispiel weist die mit dem DC/DC-Wandler 4 verbundene Gleichspannungsquelle mindestens ein Photovoltaikmodul auf. Bei dem in Fig. 2 dargestellten Ausführungsbeispiel enthält die Hochsetzstellerschaltung 4, die als DC/DC-Wandlerstufe 4 dient, einen Kondensator C, eine Spule L, eine Diode D sowie einen ansteuerbaren Boostschalter $S_{Boost}$. Bei dem Boostschalter kann es sich beispielsweise um einen IGBT handeln. Dieser Boostschalter $S_{Boost}$ wird durch eine Ansteuerlogik 10 des Wechselrichters 1 im Normalbetrieb angesteuert. Die im erfindungsgemäßen Wechselrichter 1 vorgesehen Zwischenkreis-Überwachungseinheit 8 steuert über eine Steuerleitung 11 die vorhandene Ansteuerlogik 10 des Wechselrichters 1 derart an, dass der getaktete Boostschalter $S_{Boost}$ des DC/DC-Wandlers 4 im Schutzbetriebsmodus, d.h. bei Auftreten einer sensorisch erfassten Überspannung an einem der beiden Kondensatoren C1, C2 des Zwischenkreises 5 und/oder bei Erkennen einer unsymmetrischen Spannungsaufteilung der an den Kondensatoren C1, C2 des Zwischenkreises 5 abfallenden Spannungen U1, U2 die von der Gleichspannungsquelle 3 über die DC/DC-Stufe 4 an den Zwischenkreis 5 übertragene elektrische Energie reduziert, um den Zwischenkreis 5 zu schützen. Bei dem in Fig. 2 dargestellten Ausführungsbeispiel wird die DC/DC-Stufe 4 bzw. die Hochsetzstellerschaltung schaltungstechnisch selbst nicht verändert. Der in dem DC/DC-Wandler 4 bereits vorhandene Boostschalter $S_{Boost}$ wird bei dem erfindungsgemäßen Wechselrichter 1 dazu verwendet, zusätzlich in einem Schutzbetriebsmodus des Wechselrichters 1 den Zwischenkreis 5 vor Überspannungen zu schützen. Tritt beispielsweise an der DC/AC-Stufe 6 des Wechselrichters 1 ein Defekt auf, kann dies zu einer unsymmetrischen Spannungsaufteilung der an den Kondensatoren C1, C2 des Zwischenkreises 5 abfallenden Spannungen U1, U2 führen bzw. zu einer lokalen Überspannung an einem der Kondensatoren C des Zwischenkreises 5. In einer möglichen Ausführungsform kann die Zwischenkreis-Überwachungseinheit 8 eine Spannungsdifferenz ΔU zwischen den über die Kondensatoren C1, C2 des Zwischenkreises 5 abfallenden Spannungen $U_1$ und $U_2$ ermitteln. Hierbei ist der Betrag der Spannungsdifferenz ΔU ausreichend.

$$\Delta U = |U_1 - U_2|$$

Eine unsymmetrische Spannungsaufteilung wird automatisch detektiert, sobald die ermittelte Spannungsdifferenz ΔU zwischen den über die Kondensatoren C des Zwischenkreises 5 abfallenden Spannungen einen Schwellenwert überschreitet:

$$\Delta U \geq U_{Diffmax}$$

In diesem Fall kann die Zwischenkreis-Überwachungseinheit 8 der Ansteuerlogik 10 des Boostschalters $S_{Boost}$ die Notwendigkeit eines Schutzes des Zwischenkreises 5 anzeigen, sodass die Ansteuerlogik 10 den von ihr angesteuerten Boostschalter $S_{Boost}$ nunmehr derart ansteuert, dass die von der Gleichspannungsquelle 3 an den Zwischenkreis 5 übertragene elektrische Energie verringert wird. Dies geschieht vorzugsweise durch Änderung eines Taktverhältnisses ($T_{on}$ / ($T_{on}$ + $T_{off}$)) des Ansteuersignales des Boostschalters $S_{Boost}$. das die Ansteuerlogik 10 generiert. Hierdurch wird verhindert, dass die Kondensatoren C, insbesondere die Elektrolytkondensatoren des Zwischenkreises 5, über ihre Bemessungsspannung hinaus belastet werden. Durch das zeitweise getaktete Kurzschließen der Photovoltaikmodule bzw. Photovoltaikstränge wird erreicht, dass die Spannungsbelastbarkeit der Elektrolytkondensatoren innerhalb des Zwischenkreises 5 nicht überschritten wird. Dies ist der Fall, weil die Kondensatoren während des Kurzschlusses nicht geladen werden. In einer möglichen Ausführungsform wird ab Auftreten bzw. Detektion der Überspannung der Boostschalter $S_{Boost}$ der DC/DC-Stufe 4 derart angesteuert, dass die Energieübertragung aus der Gleichspannungsquelle 3 in den Zwischenkreis 5 hinein vermindert wird. Diese Ansteuerung des Boostschalters bzw. IGBTs die DC/DC-Stufe 4 bleibt dann im weiteren Betrieb des Wechselrichters 1 im Schutzbetriebsmodus erhalten. Bei dem in Fig. 2 dargestellten Ausführungsbeispiel ist der DC/AC-Wandler 6 des Wechselrichters 1 ausgangsseitig über mindestens eine Drosselspule $L_D$ und mindestens ein AC-Relais mit einem Spannungsversorgungsnetz N verbunden.

In einer möglichen Ausführungsform weist die DC/AC-Stufe 6 eine Multilevel-Schaltungstopologie auf. Die beiden Kondensatoren C1, C2 sind beispielsweise 500 Volt Kondensatoren, die eine Leerlaufspannung von 1000 V bereitstellen.

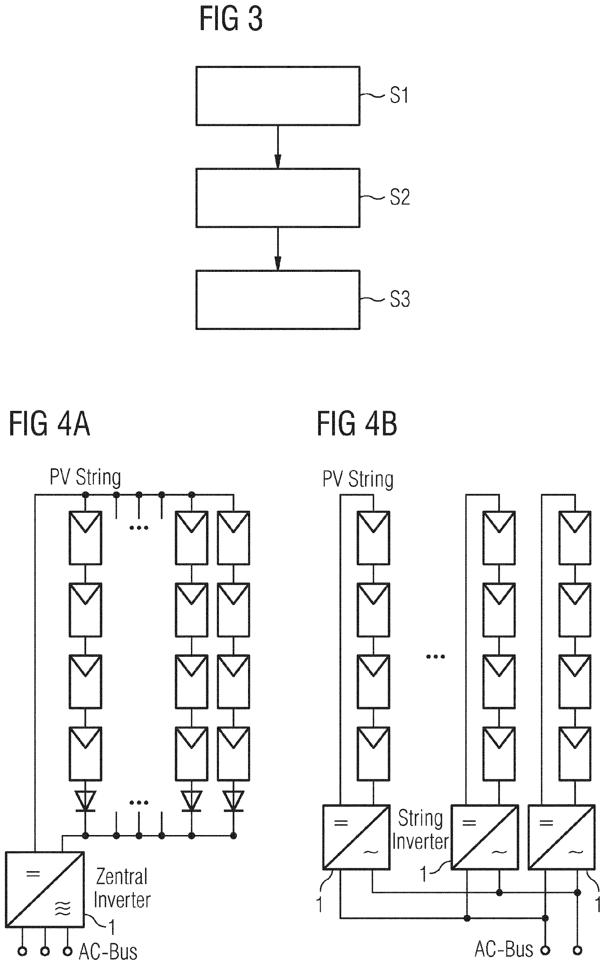

Fig. 3 zeigt ein Ablaufdiagramm zur Darstellung eines Ausführungsbeispiels des erfindungsgemäßen Verfahrens zum Schutz eines Wechselrichter-Zwischenkreises, der zur Pufferung einer von einem DC/DC-Wandler abhängigen Spannung vorgesehen ist und mehrere Kondensatoren aufweist.

Bei dem in Fig. 3 dargestellten Ausführungsbeispiel weist das Verfahren zum Schutz des Wechselrichter-Zwischenkreises im Wesentlichen drei Hauptschritte auf.

In einem ersten Schritt S1 werden die über die Kondensatoren C des Zwischenkreises jeweils abfallenden Spannungen U sensorisch erfasst.

In einem weiteren Schritt S2 wird überwacht, ob eine Überspannung an einem der Kondensatoren C des Zwischenkreises und/oder eine unsymmetrische Spannungsaufteilung der an den Kondensatoren C des Zwischenkreises abfallenden Spannungen auftritt.

In einem weiteren Schritt S3 wird die an den Zwischenkreis übertragene Energie durch Ansteuerung des DC/DC-Wandlers reduziert, sobald eine Überspannung und/oder eine unsymmetrische Spannungsaufteilung im Schritt S2 detektiert worden ist.

Dies geschieht vorzugsweise indem ein getakteter Schalter innerhalb des DC/DC-Wandlers derart angesteuert wird, dass die von einer Gleichspannungsquelle über den DC/DC-Wandler an den Zwischenkreis übertragene elektrische Energie reduziert wird.

In einer möglichen Ausführungsform des erfindungsgemäßen Verfahrens wird im Schritt S2 eine Spannungsdifferenz $\Delta U$ zwischen den über die Kondensatoren C des Zwischenkreises abfallenden Spannungen ermittelt bzw. berechnet. Sobald die berechnete Spannungsdifferenz $\Delta U$ zwischen den über die Kondensatoren des Zwischenkreises abfallenden Spannungen einen Schwellenwert überschreitet, wird im Schritt S2 eine unsymmetrische Spannungsaufteilung erkannt bzw. detektiert, die eine Entkopplung des Zwischenkreises von der Gleichspannungsquelle bzw. eine Verminderung der übertragenen Energie durch Ansteuerung des DC/DC-Wandlers im Schritt S3 triggert bzw. auslöst.

Das in Fig. 3 dargestellte Verfahren kann beispielsweise durch einen Prozessor bzw. Mikroprozessor ausgeführt werden. Die Zwischenkreis-Überwachungseinheit 8 bildet vorzugsweise einen Teil eines solchen Prozessors. Die in Fig. 2 dargestellte Zwischenkreis-Überwachungseinheit 8 kann in die Ansteuerlogik 10 integriert werden.

Fig. 4a, 4b zeigen Anwendungsbeispiele für einen erfindungsgemäßen Wechselrichter 1 integrierter Schutzschaltung zum Schutz des darin enthaltenen Zwischenkreises. Fig. 4a zeigt die Verschaltung eines Wechselrichters als Zentral-Wechselrichter für ein Feld von Photovoltaikstrings. Fig. 4b zeigt eine Anwendung des erfindungsgemäßen Wechselrichters 1 als String-Wechselrichter für einen zugehörigen Photovoltaikstring.

Bei dem in Fig. 1, 2 dargestellten Ausführungsbeispiel befindet sich die Zwischenkreis-Überwachungseinheit 8 vorzugsweise innerhalb eines Gehäuses des Wechselrichters 1. Alternativ kann die Zwischenkreis-Überwachungseinheit 8 auch in einer entfernten Steuerung integriert werden, die über eine Steuerschnittstelle mit dem Wechselrichter 1 verbunden ist. In einer möglichen Ausführungsform wird über eine zentrale Steuerung die Vielzahl unterschiedlicher Wechselrichter 1 überwacht. In einer möglichen Ausführungsform können die verschiedenen Wechselrichter 1 einen Wechsel in den Schutzbetriebsmodus an eine zentrale Steuerung der Anlage melden. In dem in Fig. 2 dargestellten Ausführungsbeispiel wird die DC/DC-Stufe 4 durch eine Boostschaltung bzw. Hochsetzstellerschaltung gebildet, wobei die angeschlossene Gleichspannungsquelle 3 getaktet zeitweise kurzgeschlossen wird, um die übertragene Energie zu reduzieren. Alternativ kann auch eine Buck-Schaltung als DC-Stufe verwendet werden. Der für das erfindungsgemäße Verfahren und die erfindungsgemäße Vorrichtung zu betreibende schaltungstechnische Aufwand ist minimal, da innerhalb des Wechselrichters 1 bereits vorhandene schaltungstechnische Komponenten bzw. Bauteile für den Schutzbetrieb verwendet werden.

Bei Detektion der Unsymmetrie/Überspannung kann zusätzlich ein AC-Relais bzw. eine zusätzliche Energiequelle (z. B. Batterie) ausgeschaltet werden.

**Patentansprüche**

1. Wechselrichter (1) mit

   - einem DC/DC-Wandler (4), der eine von einer Gleichspannungsquelle (3) erhaltene Gleichspannung ($U_{DC}$) in eine Zwischenkreisspannung ($U_{ZK}$) eines Zwischenkreises (5) umwandelt,

   - einem DC/AC-Wandler (6), der die Zwischenkreisspannung ($U_{ZK}$) in eine Wechselspannung ($U_{AC}$) umwandelt, und mit

   - einer Überwachungseinheit (8), welche Kondensatoren (C1, C2) des Zwischenkreises (5) zum Schutz vor Überspannungen überwacht, wobei die Überwachungseinheit (8) bei Auftreten einer Überspannung an mindestens einem der Kondensatoren (C1, C2) des Zwischenkreises (5) und/oder bei Auftreten einer unsymmetrischen Spannungsaufteilung der an den Kondensatoren (C1, C2) des Zwischenkreises (5) abfallenden Spannungen (U1, U2) die von der Gleichspannungsquelle (3) an den Zwischenkreis (5) übertragene Energie durch Ansteuerung des DC/DC-Wandlers (4) reduziert.

2. Wechselrichter nach Anspruch 1,
   wobei die Überwachungseinheit (8), sobald sie eine Überspannung an einem der Kondensatoren (C1, C2) des Zwischenkreises (5) oder eine unsymmetrische Spannungsaufteilung der an den Kondensatoren (C1, C2) des Zwischenkreises (5) abfallenden Spannungen (U1, U2) detektiert, einen getakteten Schalter ($S_{BOOST}$) des DC/DC-Wandlers (4) über eine Ansteuerlogik (10) derart ansteuert, dass die von der Gleichspannungsquelle (3) an den Zwischenkreis (5) übertragene Energie reduziert wird.

**3.** Wechselrichter nach Anspruch 1 oder 2, wobei der DC/DC-Wandler (4) eine Hochsetzstellerschaltung aufweist, die eine von einer Gleichspannungsquelle (3) generierte Gleichspannung ($U_{DC}$) auf eine vorgegebene Zwischenkreisspannung ($U_{ZK}$) des Zwischenkreises (5) anhebt.

**4.** Wechselrichter nach einem der vorangehenden Ansprüche 1 bis 3, wobei die mit dem DC/DC-Wandler (4) verbundene Gleichspannungsquelle (3) mindestens ein Photovoltaikmodul aufweist.

**5.** Wechselrichter nach Anspruch 3 oder 4, wobei die Überwachungseinheit (8) des Zwischenkreises (5) einen getakteten Boostschalter ($S_{Boost}$) der Hochsetzstellerschaltung über die Ansteuerlogik (10) ansteuert, falls eine Überspannung an einem der Kondensatoren (C1, C2) des Zwischenkreises (5) und/oder eine unsymmetrische Spannungsaufteilung der an den Kondensatoren (C1, C2) des Zwischenkreises (5) abfallenden Spannungen (U1, U2) durch die Überwachungseinheit (8) des Wechselrichters (1) detektiert wird.

**6.** Wechselrichter nach einem der Ansprüche 1 bis 5, wobei der DC/AC-Wandler (6) ausgangsseitig über mindestens eine Drosselspule ($L_D$) und mindestens ein AC-Relais mit einem Spannungsversorgungsnetz (N) verbunden ist.

**7.** Wechselrichter nach einem der vorangehenden Ansprüche 1 bis 6, wobei die Überwachungseinheit (8) des Wechselrichters (1) das Auftreten einer Überspannung an einem der Kondensatoren (C1, C2) des Zwischenkreises (5) und/oder das Auftreten einer unsymmetrischen Spannungsaufteilung der an den Kondensatoren (C1, C2) des Zwischenkreises (5) abfallenden Spannungen (U1, U2) in einem Speicher der Überwachungseinheit (ZKÜE) speichert und/oder einen Schutzbetriebsmodus zum Schutz der Kondensatoren (C1, C2) des Zwischenkreises (5) vor Überspannungen aktiviert.

**8.** Wechselrichter nach einem der vorangehenden Ansprüche 1 bis 7, wobei die Überwachungseinheit (8) ein Fehlersignal (F) über eine Schnittstelle ausgibt, falls eine Überspannung an einem der Kondensatoren (C1, C2) des Zwischenkreises (5) und/oder eine unsymmetrische Spannungsaufteilung der an den Kondensatoren (C1, C2) des Zwischenkreises (5) abfallenden Spannungen (U1, U2) durch die Überwachungseinheit (8) des Wechselrichters (1) detektiert wird.

**9.** Wechselrichter nach einem der vorangehenden Ansprüche 1 bis 8,

wobei die Spannungsabfälle über jeden der innerhalb des Zwischenkreises (5) seriell verschalteten Kondensatoren (C1, C2) mittels Spannungssensoren der Überwachungseinheit (8) gemessen werden.

**10.** Wechselrichter nach einem der vorangehenden Ansprüche 1 bis 9, wobei der Zwischenkreis (5) mindestens zwei seriell verschaltete Elektrolytkondensatoren aufweist.

**11.** Wechselrichter nach einem der vorangehenden Ansprüche 2 bis 10, wobei die Überwachungseinheit (8) und die Ansteuerlogik (10) von der Gleichspannungsquelle (3) versorgt werden oder über ein eigenes Netzteil verfügen, das an einem Spannungsversorgungsnetz angeschlossen ist.

**12.** Verfahren zum Schutz eines Wechselrichter-Zwischenkreises (5), der zur Pufferung einer von einem DC/DC-Wandler (4) abgegebenen Spannung vorgesehen ist und mehrere Kondensatoren (C1, C2) aufweist, wobei das Verfahren die folgenden Schritte umfasst:

(a) Erfassen (S1) der über die Kondensatoren (C1, C2) des Zwischenkreises (5) jeweils abfallenden Spannungen (U1, U2) ;

(b) Überwachen (S2), ob eine Überspannung an einem der Kondensatoren (C1, C2) des Zwischenkreises (5) und/oder eine unsymmetrische Spannungsaufteilung der an den Kondensatoren (C1, C2) des Zwischenkreises (5) abfallenden Spannungen auftritt; und

(c) Reduzieren (S3) der an den Zwischenkreis (5) übertragenen Energie durch Ansteuerung des DC/DC-Wandlers (4), sobald eine Überspannung und/oder eine unsymmetrische Spannungsaufteilung detektiert wird.

**13.** Verfahren nach Anspruch 12, wobei sobald eine Überspannung an einem der Kondensatoren (C1, C2) des Zwischenkreises (5) oder eine unsymmetrische Spannungsaufteilung der an den Kondensatoren (C1, C2) des Zwischenkreises (5) abfallenden Spannungen (V1, V2) detektiert wird, ein getakteter Schalter ($S$BOOST) des DC/DC-Wandlers (4) derart angesteuert wird, dass die von einer Gleichspannungsquelle (3) über den DC/DC-Wandler (4) an den Zwischenkreis (5) übertragene Energie reduziert wird.

**14.** Verfahren nach Anspruch 13, wobei eine Spannungsdifferenz zwischen den über die Kondensatoren (C1, C2) des Zwischenkreises (5) abfallenden Spannungen (V1, V2) ermittelt wird.

**15.** Verfahren nach Anspruch 14,
wobei eine unsymmetrische Spannungsaufteilung detektiert wird, sobald die ermittelte Spannungsdifferenz zwischen den über die Kondensatoren (C1, C2) des Zwischenkreises (5) abfallenden Spannungen (V1, V2) einen Schwellenwert überschreitet.

FIG 1

# FIG 2

EP 3 605 813 A1

EP 3 605 813 A1

## FIG 3

## FIG 4A

PV String

Zentral
Inverter

AC-Bus

## FIG 4B

PV String

String
Inverter

AC-Bus

11

EP 3 605 813 A1

**Europäisches Patentamt**
**European Patent Office**
**Office européen des brevets**

# EUROPÄISCHER RECHERCHENBERICHT

Nummer der Anmeldung

EP 18 18 6354

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/244166 A1 (CHEN HAN-WEI [TW] ET AL) 27. August 2015 (2015-08-27) * Absätze [0027] - [0028]; Abbildung 3 * ----- | 1-8, 11-13 | INV. H02M1/32 H02M3/155 H02M7/48 H02M3/156 |
| X | US 2014/001838 A1 (WATANABE YASUTO [JP] ET AL) 2. Januar 2014 (2014-01-02) * Absätze [0051], [0059]; Abbildung 2 * * Absätze [0004] - [0007] * * Absätze [0096], [0104], [0108]; Abbildung 9 * ----- | 1-3,5, 7-10,12, 13 | |
| A | DE 10 2013 114271 A1 (SMA SOLAR TECHNOLOGY AG [DE]) 18. Juni 2015 (2015-06-18) * Absatz [0033]; Abbildung 1 * ----- | 1-15 | |

| | |
|---|---|
| | **RECHERCHIERTE SACHGEBIETE (IPC)** |
| | H02M |

Der vorliegende Recherchenbericht wurde für alle Patentansprüche erstellt

| Recherchenort | Abschlußdatum der Recherche | Prüfer |
|---|---|---|
| Den Haag | 8. Februar 2019 | van Wesenbeeck, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

12

**ANHANG ZUM EUROPÄISCHEN RECHERCHENBERICHT
ÜBER DIE EUROPÄISCHE PATENTANMELDUNG NR.**

EP 18 18 6354

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2019

| Im Recherchenbericht angeführtes Patentdokument | Datum der Veröffentlichung | Mitglied(er) der Patentfamilie | Datum der Veröffentlichung |
|---|---|---|---|
| US 2015244166 A1 | 27-08-2015 | KEINE | |
| US 2014001838 A1 | 02-01-2014 | CN 103516195 A | 15-01-2014 |
| | | DE 102013204133 A1 | 02-01-2014 |
| | | JP 2014011897 A | 20-01-2014 |
| | | US 2014001838 A1 | 02-01-2014 |
| DE 102013114271 A1 | 18-06-2015 | CN 105830324 A | 03-08-2016 |
| | | DE 102013114271 A1 | 18-06-2015 |
| | | EP 3084943 A1 | 26-10-2016 |
| | | JP 6393334 B2 | 19-09-2018 |
| | | JP 2017510229 A | 06-04-2017 |
| | | US 2016301312 A1 | 13-10-2016 |
| | | WO 2015091625 A1 | 25-06-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2145368 B1